# EUROPÄISCHE PATENTSCHRIFT

(11) **EP 2 707 275 B1**
(45) Veröffentlichungstag und Bekanntmachung des Hinweises auf die Patenterteilung: **20.01.2016**
(21) Anmeldenummer: 12717251.8
(22) Anmeldetag: 17.04.2012
(51) Int. Cl.: B62M 3/00, B62M 6/50

(54) **TRETLAGEREINHEIT FÜR EIN FAHRRAD**
BOTTOM BRACKET UNIT FOR A BICYCLE
ENSEMBLE PÉDALIER DE BICYCLETTE

(30) Priorität: 12.05.2011 DE 102011075709
(43) Veröffentlichungstag der Anmeldung: 19.03.2014
(73) Patentinhaber: Schaeffler Technologies AG & Co. KG, 91074 Herzogenaurach (DE)
(72) Erfinder: NEUBAUER, Markus, 96117 Lichteneiche (DE); GLÜCK, Stefan, 97424 Schweinfurt (DE); BENKERT, Frank, 97534 Waigolshausen (DE)
(86) Internationale Anmeldenummer: PCT/EP2012/056955
(87) Internationale Veröffentlichungsnummer: WO 2012/152540

(56) Entgegenhaltungen:
- EP-A2- 0 976 649
- CH-B1- 702 983
- DE-A1- 4 320 834
- DE-A1- 19 609 981
- DE-A1-102009 021 541
- US-A1- 2010 299 926

## Beschreibung

Die Erfindung betrifft eine Tretlagereinheit nach dem Oberbegriff des Anspruchs 1 sowie ein Fahrrad, insbesondere ein E-Bike, Pedelec oder Ergometer, nach Anspruch 16 mit einer derartigen Tretlagereinheit.

Aus dem Stand der Technik sind Fahrräder, insbesondere E-Bikes, Pedelecs oder Ergometer, bekannt, die gestatten, die von einem Bediener über Kurbeln in die Tretlagerwelle eingebrachten Drehmomente zu erfassen. Um die Leistung des Bedieners zu ermitteln, beispielsweise auch, um einen elektrischen Zusatzantrieb für das Fahrrad ansteuern zu können, ist zusätzlich zu der Erfassung des Drehmomentes auch eine Erfassung der Drehzahl der Tretlagerwelle erforderlich.

DE 10 2009 021 541 A1 beschreibt eine Tretlagereinheit gemäß dem Oberbegriff des Anspruchs 1, mit einer Tretlagerwelle, die mittels zweier Lager drehbar gelagert ist, wobei ein Lagerkäfig drehfest auf der Oberfläche des Korpus der Tretlagerwelle befestigt ist, und wobei die Stege des Lagerkäfigs von einem optischen Sensor erfasst werden, um die Drehzahl der Tretlagerwelle zu ermitteln. Der Lagerkäfig ist dabei als Signalgeber des Sensors ausgebildet.

DE 10 2008 050 235 A1 beschreibt eine Tretlagereinheit mit einer Tretlagerwelle, die mittels zweier Lager drehbar aufgenommen ist, wobei in einem Magnetfeld-Abschnitt des Korpus der Tretlagerwelle ein permanentes Magnetfeld so eingeprägt ist, dass bei Vorliegen eines Drehmomentes in der Tretlagerwelle aufgrund des magnetostriktiven Effektes ein außerhalb des Korpus erfassbares Magnetfeld erzeugt wird. Dabei umlaufen die Flusslinien des Magnetfeldes im drehmoment-freien Zustand der Tretlagerwelle die Drehachse der Tretlagerwelle im wesentlichen konzentrisch. Tritt in der Tretlagerwelle ein Drehmoment auf, entsteht aufgrund des magnetostriktiven Effektes eine Magnetfeld-Komponente, die nicht mehr tangential gerichtet ist, so dass ein außerhalb der Tretlagerwelle auftretendes Magnetfeld nachweisbar ist. Die Tretlagereinheit umfasst weiter einen magnetischen Sensor, der das bei Vorliegen des Drehmomentes auftretende Magnetfeld erfasst. Die Tretlagereinheit umfasst ebenfalls eine optische Erfassungseinheit, mittels derer die Drehzahl der Tretlagerwelle erfassbar ist, wobei die optische Erfassungseinheit mindestens einen an der Tretlagerwelle drehfesten Signalgeber anmisst, wobei als Signalgeber eine Strukturierung der Oberfläche der Tretlagerwelle vorgesehen ist. Hierbei ist ungünstig, dass zwar die Drehzahl der Tretlagerwelle erfasst werden kann, nicht jedoch die Drehrichtung.

### Aufgabe der Erfindung

Es ist die Aufgabe der Erfindung, eine Tretlagereinheit anzugeben, die zusätzlich zu der Drehzahl auch die Drehrichtung der Tretlagerwelle erfassen kann.

### Zusammenfassung der Erfindung

Diese Aufgabe wird erfindungsgemäß für die eingangs genannte Tretlagerwelle dadurch gelöst, dass die optische Erfassungseinheit zwei optische Sensoren umfasst, wobei der eine der beiden Sensoren ein bezüglich des anderen Sensors phasenverschobenes Signal mit einer festen Phasendifferenz, insbesondere mit einer Phasendifferenz von 90°, liefert.

Aufgrund der Phasendifferenz lässt sich ermitteln, welcher der beiden optischen Sensoren das zeitlich frühere Signal liefert, so dass sich die Drehrichtung erfassen lässt. Auch bei einer stehenden Tretlagerwelle lässt sich ermitteln, welche Drehrichtung die Tretlagerwelle vor dem Stillstand hatte, wenn die Signale der beiden Sensoren unmittelbar vor dem Eintreten des Stillstandes gespeichert werden.

Vorzugsweise ist vorgesehen, dass die beiden optischen Sensoren einen einzigen, gemeinsamen Signalgeber anmessen. Der Signalgeber kann beispielsweise eine Markierung umfassen, die auf der Tretlagerwelle angeordnet ist, wobei die Sensoren in Umfangsrichtung der Tretlagerwelle versetzt angeordnet sind. Der Signalgeber kann alternativ oder ergänzend hierzu eine mit der Tretlagerwelle drehfeste Scheibe umfassen, wobei die beiden optischen Sensoren, in Umfangsrichtung der Scheibe versetzt, zu beiden Seiten der Scheibe angeordnet sein können. In beiden, beispielhaft angeführten Fällen, lässt sich Bauraum in axialer Richtung, also in Richtung der Erstreckung der Tretlagerwelle bzw. in Richtung der Drehachse der Tretlagerwelle, einsparen.

Vorzugsweise ist vorgesehen, dass der erste optische Sensor einen ersten Signalgeber und der zweite optische Sensor einen zweiten Signalgeber anmisst, wobei die beiden Signalgeber relativ zueinander um eine feste Phasendifferenz verdreht angeordnet sind. Die beiden optischen Sensoren müssen in diesem Fall nicht zwingend in Umfangsrichtung beabstandet angeordnet sein, sind jedoch beispielsweise in axialer Richtung beabstandet, so dass sich Bauraum in radialer Richtung, bezogen auf die Drehachse der Tretlagerwelle, einsparen lässt.

Vorzugsweise ist vorgesehen, dass der Signalgeber eine Markierung umfasst. Die Markierung ist in Drehrichtung der Tretlagerwelle umlaufend ausgebildet und liefert bei den beiden optischen Sensoren eine regelmäßige, beispielsweise periodische Abfolge von Signalen.

Vorzugsweise ist hinsichtlich der Markierung vorgesehen, dass die Markierung an einer Scheibe ausgebildet ist, die mit der Tretlagerwelle drehfest verbunden ist und sich im wesentlichen senkrecht zu der Drehachse der Tretlagerwelle erstreckt. Die Scheibe nimmt nur wenig Bauraum in axialer und radialer Richtung der Tretlagerwelle in Anspruch und bietet einen weiteren Freiheitsgrad hinsichtlich der Anordnung der beiden optischen Sensoren.

Beispielsweise kann vorzugsweise vorgesehen sein, dass die Markierung an einem Lagerring des Lagers, insbesondere an einer Stirnfläche des Lagerrings des Lagers, angeordnet ist. Die Markierung kann unmittelbar auf der Stirnfläche des Lagerrings angeordnet sein, oder auf einer Scheibe vorgesehen sein, wobei die Scheibe an dem Lagerring, beispielsweise auf einer Stirnfläche des Lagerrings, angeordnet wird. Die Markierung sowie die optischen Sensoren lassen sich dabei beabstandet von dem Magnetfeld-Abschnitt des Korpus der Tretlagerwelle anordnen, so dass nahe des Lagers bestehender Bauraum für die Erfassung der Drehzahl und der Drehrichtung genutzt werden kann.

Hinsichtlich der Anordnung der Markierung an einem Lagerring des Lagers der Tretlagereinheit ist vorzugsweise vorgesehen, dass die Markierung an einer Dichtung angeordnet ist, die mit dem Lagerring des Lagers drehfest verbunden ist. Die Dichtung weist einen radialen Abstand von der Oberfläche des Korpus der Tretlagerwelle auf, so dass die beiden optischen Sensoren an einer in vielen Fällen nicht genutzten Stelle der Tretlagereinheit platziert werden können.

Vorzugsweise ist vorgesehen, dass die Markierung auf der Oberfläche des Korpus der Tretlagerwelle angeordnet ist. Insbesondere ist vorzugsweise vorgesehen, dass in einem Magnetfeld-Abschnitt des Korpus der Tretlagerwelle ein permanentes Magnetfeld so eingeprägt ist, dass bei Vorliegen eines Drehmomentes in der Tretlagerwelle ein außerhalb des Korpus erfassbares Magnetfeld erzeugt wird, wobei die Tretlagereinheit einen magnetischen Sensor umfasst, der das bei Vorliegen des Drehmomentes auftretende Magnetfeld erfasst, und dass die Markierung auf der Oberfläche des Korpus der Tretlagerwelle, insbesondere an dem Magnetfeld-Abschnitt, angeordnet ist. Dabei nimmt die Markierung keinen zusätzlichen Bauraum in axialer oder radialer Richtung, bezogen auf die Drehachse der Tretlagerwelle, ein. Die optischen Sensoren können nahe an den magnetischen Sensor, der das aufgrund des Drehmomentes in der Tretlagerwelle erzeugte Magnetfeld erfassen soll, angeordnet sein. Sind insbesondere zwei axial beabstandete Magnetfeld-Abschnitte an der Tretlagerwelle vorgesehen, die von je einem magnetischen Sensor erfasst werden, sind die beiden optischen Sensoren beispielsweise axial zwischen den beiden magnetischen Sensoren angeordnet, ohne dass sich mindestens vier Sensoren auf engem Raum behindern.

Vorzugsweise ist vorgesehen, dass die Markierung durch eine in Umfangsrichtung umlaufende Abfolge von Abschnitten mit einer unterschiedlichen Beschichtung, Farbe, Lackierung oder Oberflächenrauhigkeit ausgebildet ist.

Alternativ oder ergänzend hierzu ist vorzugsweise vorgesehen, dass die Markierung durch ein Schlauch- oder Folienelement ausgebildet ist. Das Schlauch- oder Folienelement kann beispielsweise die Beschichtung, Farbe oder Lackierung bzw. die abschnittsweise unterschiedliche Oberflächenrauhigkeit aufweisen, so dass sich eine Bearbeitung des Korpus der Tretlagewelle erübrigt und ein Aufbringen der Markierung durch ein Aufbringen des Schlauch- oder Folienelementes leicht durchführbar ist, beispielsweise durch ein Aufschrumpfen eines Schrumpfschlauchs oder durch ein Befestigen eines Gummischlauches. Das Schlauch- oder Folienelement kann selbst die Markierung ausbilden, beispielsweise, indem Abschnitte des Schlauch- oder Folienelementes ausgespart sind, die von den optischen Sensoren angemessen und erfasst werden.

Vorzugsweise ist vorgesehen, dass der Signalgeber ein am Umfang in Umfangsrichtung gezähntes Scheibenelement umfasst, wobei die Zähne der Zähnung einen Teil der Markierung ausbilden. An dem Umfang des Scheibenelementes sind Materialaussparungen vorgesehen, zwischen denen jeweils ein Zahn der Zähnung ausgebildet wird. Die Zähne bilden einen Teil der Markierung aus, die von einem oder beiden optischen Sensoren beispielsweise in einer Lichtschranken-Anordnung ausgemessen werden kann. Es kann insbesondere vorgesehen sein, dass die Markierung durch die Zähne sowie die zwischen zwei benachbarten Zähnen vorgesehenen Lücken ausgebildet ist.

Vorzugsweise ist vorgesehen, dass das Scheibenelement als Zuschnitt eines Axialnadellagerkäfigs ausgebildet ist. Die Zähne der Zähnung werden dabei durch die Abschnitte der Stege des Axialnadellagerkäfigs gebildet, die bei dem Zuschneiden des Käfigs teilweise stehen gelassen werden.

Vorzugsweise ist vorgesehen, dass das Teilungsverhältnis der Markierung für jeden Teilkreis konstant ist. Bei einer radialen Verschiebung, also bei einer Änderung des Radius des Teilkreises, im Betrieb der Tretlagereinheit bleibt das Teilungsverhältnis, also das Verhältnis der Erstreckung in Umfangsrichtung der verschiedenen Abschnitte der Markierung, konstant, so dass ein radialer Versatz der optischen Erfassungseinheit relativ zu der Tretlagerwelle insbesondere das Tastverhältnis, also den Quotienten der Periodenlängen aufeinander folgender Signale, für jeden der beiden optischen Sensoren unverändert belässt.

Vorzugsweise ist vorgesehen, dass mindestens einer der beiden optischen Sensoren als Reflektionssensor ausgebildet ist. Der Sensor umfasst dabei eine Lichtquelle und einen Lichtempfänger, die auf der gleichen Seite, bezogen auf die Markierung, angeordnet sind. Besonders bevorzugt ist vorgesehen, dass beide optische Sensoren als Reflektionssensoren ausgebildet sind.

Vorzugsweise ist vorgesehen, dass mindestens einer der beiden optischen Sensoren als Transmissionssensor, insbesondere als Lichtschranke, ausgebildet ist. In diesem Fall weist der Sensor eine Lichtquelle sowie einen Lichtempfänger auf, die zu verschiednen Seiten der Markierung angeordnet sind. Dabei muss die Markierung abschnittsweise lichtdurchlässig, insbesondere mindestens transparent, sein, so dass die Markierung beispielsweise durch eine Zähnung mit einer in Umfangsrichtung verlaufenden Abfolge von Zähnen und Lücken ausgebildet ist.

Weitere Vorteile und Merkmale ergeben sich aus den abhängigen Ansprüchen sowie aus der folgenden Beschreibung von bevorzugten Ausführungsbeispielen der Erfindung.

Die Erfindung wird im folgenden unter Bezugnahme auf die anliegenden Zeichnungen näher beschrieben und erläutert.

### Kurze Beschreibung der Zeichnungen

- Fig. 1: zeigt eine teilweise geschnittene Ansicht eines ersten Ausführungsbeispiels einer erfindungsgemäßen Tretlagereinheit,
- Fig. 1a: zeigt eine Draufsicht auf einen Bestandteil des in Fig. 1 dargestellten ersten Ausführungsbeispiels,
- Fig. 2: zeigt einen Ausschnitt einer teilweise geschnittenen Ansicht eines zweiten Ausführungsbeispiels einer erfindungsgemäßen Tretlagereinheit, und
- Fig. 3: zeigt eine teilweise geschnittene Ansicht eines dritten Ausführungsbeispiels einer erfindungsgemäßen Tretlagereinheit.

### Detaillierte Beschreibung der Zeichnung

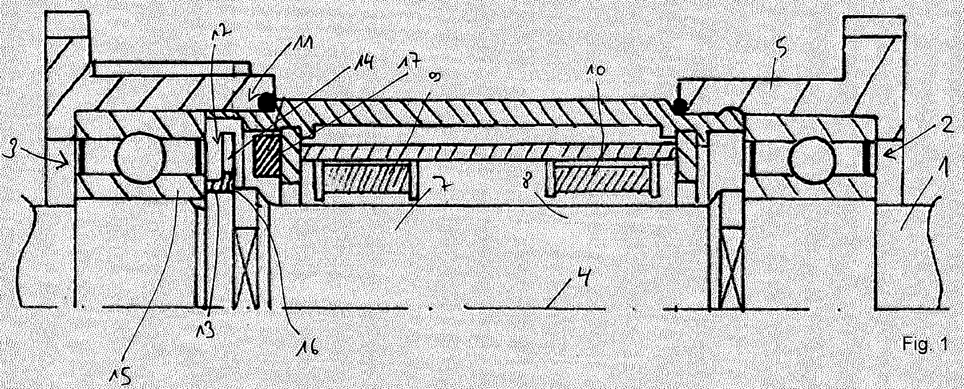

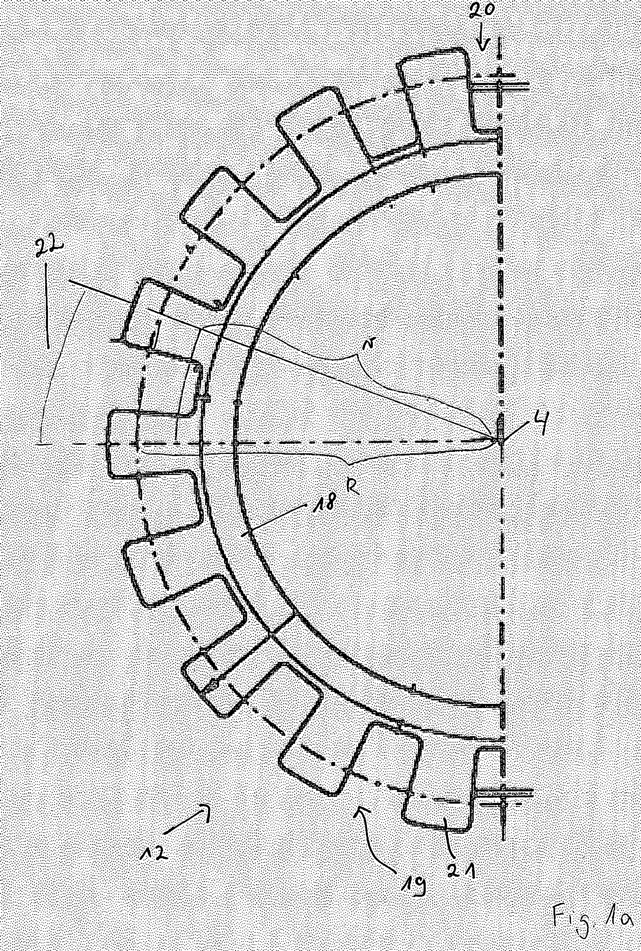

Fig. 1 zeigt eine Tretlagereinheit, die eine Tretlagerwelle 1 umfasst, die mittels zweier Lager 2, 3 um eine Drehachse 4 drehbar gegenüber einem Gehäuse 5 gelagert ist.

In das metallische Korpus der Tretlagerwelle 1 ist im Bereich eines ersten Magnetfeld-Abschnittes 7 ein erstes permanentes Magnetfeld und im Bereich eines zweiten Magnetfeld-Abschnittes 8 ein zweites permanentes Magnetfeld eingeprägt. Liegt kein Drehmoment in der Tretlagerwelle 1 vor, umlaufen die beiden permanenten Magnetfelder die Drehachse 4 konzentrisch, aber gegensinnig, so dass außerhalb der Tretlagerwelle 1 nur magnetische Streufelder nachzuweisen sind. Wird in die Tretlagerwelle 1 ein Drehmoment eingebracht, beispielsweise durch einen Bediener, der mittels Tretkurbeln eine Kraft in die Tretlagerwelle 1 einleitet, treten aufgrund des magnetostriktiven Effektes in beiden Magnetfeld-Abschnitten 7, 8 äußere Magnetfelder auf, die von Betrag und Richtung unterschiedlich sein können und die ein Maß für das in der Tretlagewelle 1 vorliegende Drehmoment sind. Die äußeren Magnetfelder werden von zwei magnetischen Sensoren 9, 10 erfasst, die als Hall-Sensoren ausgebildet sind und mittelbar an dem Gehäuse 5 befestigt sind, relativ zu dem die Tretlagewelle 1 drehbar gelagert ist.

Die Tretlagereinheit umfasst weiter eine optische Erfassungseinheit 11, mittels derer die Drehzahl der Tretlagerwelle 1 erfassbar ist. Die optische Erfassungseinheit 11 misst dabei einen mit der Tretlagerwelle 1 drehfesten Signalgeber 12 an, der einen axialen Abschnitt 13 und einen sich radial, senkrecht zu der Drehachse 4 der Tretlagerwelle 1 erstreckenden radialen Abschnitt 14 aufweist. Der axiale Abschnitt 13 des Signalgebers 12 ist von einem inneren Lagerring 15 des Lagers 3 gegen einen Bord 16 an dem Korpus der Tretlagerwelle 1 verspannt befestigt, so dass der Signalgeber 12 drehfest mit der Tretlagerwelle 1 verbunden ist.

Die optische Erfassungseinheit 11 umfasst zwei optische Sensoren, deren einer mit dem Bezugszeichen '17' ausgewiesen ist und in der Schnittebene der Darstellung von Fig. 1 angeordnet ist. Der zweite optische Sensor ist in Umfangsrichtung zu dem ersten optischen Sensor 17 versetzt außerhalb der Papierebene der Darstellung von Fig. 1 angeordnet. Der erste optische Sensor 17 und der zweite optische Sensor messen beide den Signalgeber 12 als einzigen, gemeinsamen Signalgeber an. Die beiden optischen Sensoren sind auf einer gemeinsamen Platine mittelbar an dem Gehäuse 5 angeordnet.

Der Signalgeber 12 ist in Fig. 1a in einer Draufsicht entlang der Drehachse 4 dargestellt. Der radiale Abschnitt 14 des Signalgebers 12 ist als am äußeren Umfang in Umfangsrichtung gezähntes Scheibenelement 18 ausgebildet, wobei die Zähne der Zähnung einen ersten Teil einer Markierung 19 und die zwischen benachbarten Zähnen eingeschlossenen Lücken den anderen Teil der Markierung 19 ausbilden. Das Scheibenelement 18 ist als Zuschnitt aus einem Axialnadellagerkäfig ausgebildet. Der erste optische Sensor 17 ist in der Darstellung von Fig. 1 so angeordnet gezeigt, dass er die mit dem Bezugszeichen '20' ausgewiesene Lücke anmisst. Der zweite optische Sensor ist bezogen auf den ersten optischen Sensor 17 in Umfangsrichtung so versetzt angeordnet, dass er einen der Zähne, beispielsweise den mit dem Bezugszeichen ,21' ausgewiesenen Zahn, anmisst.

Die beiden optischen Sensoren sind jeweils als Reflektionssensor ausgebildet, wobei der Reflektionssensor eine Lichtquelle, beispielsweise für Infrarot-Strahlung, und einen für Infrarotstrahlung empfindlichen Lichtempfänger umfasst, und wobei der Lichtempfänger das von der Lichtquelle an der Markierung 19 reflektierte IR-Licht erfasst. An Zähnen und Lücken der Markierung 19 tritt jeweils eine Reflektion mit einem unterschiedlichen Reflektionskoeffizienten auf. Bei der Drehung des Signalgebers 12 mit der Tretlagerwelle 1 liefert jeder der optischen Sensoren 17 daher ein im wesentlichen rechteckiges, periodisches Signal, obey deer eine der beiden Sensoren, beispielsweise der ersten Sensor 17 ein bezüglich des anderen Sensors, nämlich des bildlich nicht dargestellten zweiten Sensors, phasenverschobenes Signal mit einer festen Phasendifferenz, nämlich in dem dargestellten Ausführungsbeispiel mit einer Phasendifferenz von 90°, liefert.

Aus den beiden phasenverschobenen Messwerten der beiden versetzten optischen Sensoren lässt sich die Drehrichtung ermitteln, mit der die Tretlagerwelle 1 um die Drehachse 4 dreht.

Um den Phasenversatz von 90° zu erreichen, ist es bereits ausreichend, von die beiden optischen Sensoren um eine halbe Teilung, also die Hälfte des Abstandes der Mitten zweier benachbarter Zähne, gemessen in Umfangsrichtung, versetzt angeordnet sind, bzw. das (n+0,5)-fache dieser Teilung (n: ganze Zahl). Eine ganze Teilung (n = 1) ist in Fig. 1a als Winkel 22 eingezeichnet.

Die Markierung 19 in der Darstellung von Fig. 1a mit den Zähnen und Lücken ist so ausgebildet, dass das Teilungsverhältnis der Markierung 19 für jeden Teilkreis konstant ist. Für den Teilkreis mit dem größeren Radius R ist das Teilungsverhältnis, also der Quotient aus der Erstreckung des Zahns zu der Erstreckung der Lücke, jeweils gemessen in Umfangsrichtung, der gleiche wie für den Teilkreis mit dem kleineren Radius r. Dabei bleibt für die im wesentlichen rechteckigen Signale eines jeden der beiden optischen Sensoren das Tastverhältnis konstant, auch wenn der Signalgeber 12 mit der Markierung 19 etwas exzentrisch zu der Drehachse 4 angeordnet sein sollte.

Bei der folgenden Beschreibung der beiden anderen Ausführungsbeispiele bezeichnen gleiche Bezugsziffern gleiche oder in ihrer technischen Wirkung vergleichbare Merkmale. Es sollen insbesondere die Unterschiede zu dem in Fig. 1 und Fig. 1 a dargestellten ersten Ausführungsbeispiel herausgestellt werden.

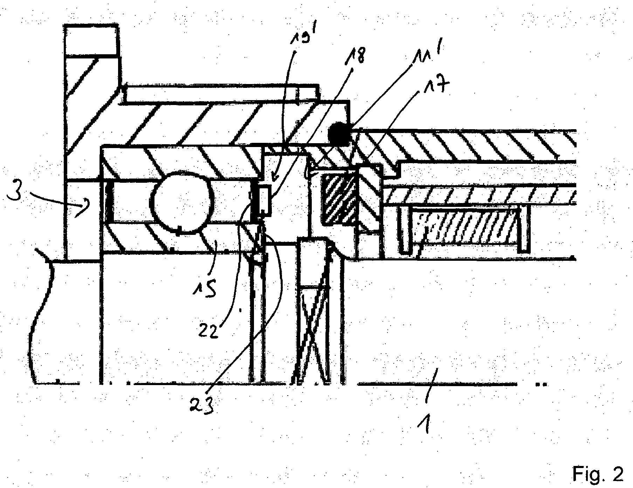

Fig. 2 zeigt ausschnittsweise eine Tretlagereinheit mit einem Lager 3, das eine Dichtung 22 aufweist, die an dem inneren Lagerring 15 und damit an der Tretlagerwelle 1 drehfest befestigt ist. An der Dichtung 22 ist eine Markierung 19' vorgesehen, die durch ein kreisringförmiges Scheibenelement 18 mit Zähnen und Lücken zwischen benachbarten Zähnen gebildet ist. Eine optische Erfassungseinheit 11' umfasst zwei optische Sensoren, deren erster mit dem Bezugszeichen ,17' ausgewiesen ist, und deren zweiter Sensor, in Umfangsrichtung der Tretlagerwelle 1 versetzt, außerhalb der Papierebene liegt.

Es versteht sich, dass in einer abgewandelten Ausführung die Markierung 19' auch an einem der Lagerringe des Lagers 3, beispielsweise an einer Stirnfläche 23 des inneren Lagerrings 15, vorgesehen sein kann, insbesondere kann das kreisringförmige Scheibenelement 18 auf der Stirnfläche 23 des inneren Lagerrings 15 direkt befestigt sein.

Bei den vorstehend beschriebenen ersten beiden Ausführungsbeispielen war jeweils vorgesehen, dass die Markierung 19, 19' an einer Scheibe ausgebildet ist, die mit der Tretlagerwelle (1) drehfest verbunden ist und sich im wesentlichen senkrecht zu der Achse der Tretlagerwelle (1) erstreckt. Dabei war in dem ersten Ausführungsbeispiel (Fig. 1) die Scheibe als Scheibenelement 18 ausgebildet, das als radialer Abschnitt 14 des Signalgebers 12 ausgeführt war, und in dem zweiten Ausführungsbeispiel (Fig. 2) als kreisringförmige Scheibenelement 18, das unmittelbar auf der Dichtung 22 des Lagers 3 angeordnet ist. In beiden Ausführungsbeispielen war das Scheibenelement 18 am Umfang in Umfangsrichtung mit einer Zähnung versehen. Es versteht sich, dass jeweils auf eine Zähnung am Umfang verzichtet sein kann, so dass die Scheibe einen kreisförmigen Umfangsumriss aufweist, wobei die Markierung auf die Scheibe aufgetragen ist, und zwar derart, dass die Markierung durch eine in Umfangsrichtung umlaufende Abfolge von Abschnitten mit einer unterschiedlichen Beschichtung, Farbe, Lackierung oder Oberflächenrauhigkeit (z. B. durch einen gezielten, lokalen Ätzprozess) ausgebildet ist.

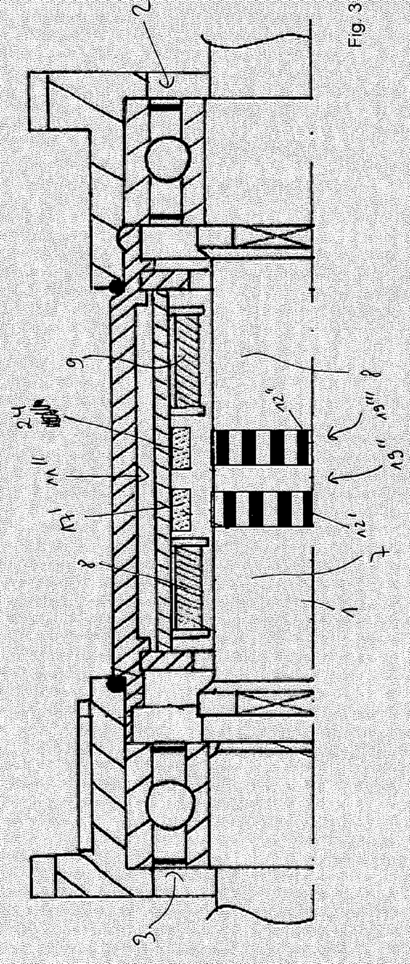

Fig. 3 zeigt eine Tretlagereinheit mit einer Tretlagerwelle 1, zwei Lager 2, 3, die die Tretlagerlagerwelle 1 drehbar aufnehmen, wobei in zwei Magnetfeld-Abschnitten 7, 8 des Korpus der Tretlagerwelle 1 ein permanentes Magnetfeld so eingeprägt ist, dass bei Vorliegen eines Drehmomentes in der Tretlagerwelle 1 ein außerhalb des Korpus erfassbares Magnetfeld erzeugt wird. Zwei magnetische Sensoren 8, 9, die als Hall-Sensoren ausgebildet sind, erfassen das bei Vorliegen des Drehmomentes außerhalb der Tretlagerwelle 1 auftretende Magnetfeld. Die Tretlagereinheit umfasst weiter eine optische Erfassungseinheit 11", mittels derer die Drehzahl der Tretlagerwelle 1 erfassbar ist, wobei die optische Erfassungseinheit 11" zwei mit der Tretlagerwelle 1 drehfeste Signalgeber 12', 12"anmisst. Die drehfesten Signalgeber 12', 12" sind an der Tretlagerwelle 1 drehfest angeordnet und bilden eine Markierung 19", 19"' für die beiden optischen Sensoren 17', 24 aus. Die beiden optischen Sensoren 17', 24 der optischen Erfassungseinheit 11' sind axial, also in Richtung der Drehachse 4 der Tretlagerwelle 1, beabstandet, in Umfangsrichtung der Tretlagerwelle 1 jedoch nicht beabstandet, sondern unmittelbar benachbart angeordnet.

Die Markierung 19' ist auf der Oberfläche des Korpus der Tretlagerwelle 1, nämlich an dem Magnetfeld-Abschnitt 7, 8, angeordnet, speziell an den Endabschnitten der Magnetfeld-Abschnitte 7, 8 vorgesehen, so dass auch die beiden optischen Sensoren 17', 24 zwischen den beiden magnetischen Sensoren 8, 9 angeordnet sind. Insbesondere ist vorgesehen, dass die Markierung 19", 19'" durch eine in Umfangsrichtung umlaufende Abfolge von Abschnitten mit einer unterschiedlichen Beschichtung, Farbe, Lackierung oder Oberflächenrauhigkeit ausgebildet ist; alternativ hierzu kann vorgesehen sein, dass die Markierung 19", 19'" durch ein Schlauch- oder Folienelement ausgebildet ist, wobei das Schlauch- oder Folienelement die Beschichtung, Farbe, Lackierung oder Oberflächenrauhigkeit der Markierung selbst aufweist und auf der Oberfläche des Korpus der Tretlagerwelle 1 befestigt ist, beispielsweise als Schrumpf- oder als Gummischlauch mit der Markierung auf der äußeren Fläche.

Bei dem dritten Ausführungsbeispiel ist insbesondere vorgesehen, dass die beiden Signalgeber 12', 12" relativ zueinander um eine feste Phasendifferenz verdreht angeordnet sind, so dass jeder der beiden optischen Sensoren 17',24 einen eigenen Signalgeber 12', 12" anmisst, wobei die Markierungen 19", 19"' als in Umfangsrichtung der Tretlagerwelle 1 verlaufende Abfolge von hellen und dunklen Abschnitten gleicher Breite, jedoch um 90° in Umfangsrichtung der Tretlagerwelle 1 phasenversetzt, angeordnet sind.

Bei den vorstehend beschriebenen drei Ausführungsbeispielen waren die optischen Sensoren 17, 17' und 17" jeweils als Reflektionssensor ausgebildet, bei denen die Lichtquelle und der Lichtempfänger auf der gleichen Seite, bezogen auf die angemessenen Signalgeber 12, 12', 12", angeordnet waren. Es versteht sich, dass die optischen Sensoren auch als Transmissionssensoren, insbesondere als Lichtschranken, ausgebildet sein können, speziell bei einem gezähnten Scheibenelement 18 als Signalgeber 12, wobei in diesem Fall die Lichtquelle auf der einen Seite des Scheibenelementes 18 und der Lichtempfänger auf der anderen Seite des Scheibenelementes 18 angeordnet ist. Die Zähne 21 unterbrechen dann jeweils den durch die Lücken 22 gehenden Lichtfluss zwischen der Lichtquelle und dem Lichtempfänger.

Die Erfindung wurde vorstehend anhand von drei Ausführungsbeispielen beschrieben und erläutert, bei denen der jeweilige erste optische Sensor 17, 17' und 17" und der zweite optische Sensor 24 eine eigene Lichtquelle und einen eigenen Lichtempfänger aufwies. Es versteht sich, dass die beiden optischen Sensoren auch eine gemeinsame Lichtquelle aufweisen können, die mittels eines Strahlteilers zwei Teilstrahlen erzeugt, wobei die beiden Teilstrahlen auf unterschiediche Abschnitte des Signalgebers bzw. auf zwei unterschiedliche Signalgeber gerichtet werden. Ebenso kann vorgesehen sein, dass der erste Sensor und der zweite Sensor einen gemeinsamen Lichtempfänger aufweisen, beispielsweise ein sich flächig erstreckendes optisch aktives Element, das die beiden Teilstrahlen an unterschiedlichen Stellen erfasst.

### Bezugszeichenliste

- 1: Tretlagerwelle
- 2: Lager
- 3: Lager
- 4: Drehachse
- 5: Gehäuse
- 7: erster Magnetfeld-Abschnitt
- 8: zweiter Magnetfeld-Abschnitt
- 9: erster magnetischer Sensor
- 10: zweiter magnetischer Sensor
- 11, 11', 11": optische Erfassungseinheit
- 12, 12', 12": Signalgeber
- 13: axialer Abschnitt
- 14: radialer Abschnitt
- 15: innerer Lagerring
- 16: Bord
- 17, 17': erster optischer Sensor
- 18, 18': Scheibenelement
- 19, 19', 19", 19"': Markierung
- 20: Lücke
- 21: Zahn
- 22: Dichtung
- 23: Stirnfläche
- 24: zweiter optischer Sensor

## Patentansprüche

1. Tretlagereinheit, umfassend
eine Tretlagerwelle (1),
mindestens ein die Tretlagerwelle (1) drehbar aufnehmendes Lager (2, 3), und
eine optische Erfassungseinheit (11; 11'; 11"), mittels derer die Drehzahl der Tretlagerwelle (1) erfassbar ist, wobei die optische Erfassungseinheit (11; 11'; 11 ") mindestens einen mit der Tretlagerwelle (1) drehfesten Signalgeber (12; 12', 12") anmisst,
**dadurch gekennzeichnet,**
**dass** die optische Erfassungseinheit (11; 11') zwei optische Sensoren (17; 17', 24) umfasst, wobei der eine der beiden Sensoren (17; 17') ein bezüglich des anderen Sensors (24) phasenverschobenes Signal mit einer festen Phasendifferenz, insbesondere mit einer Phasendifferenz von 90°, liefert.

2. Tretlagereinheit nach Anspruch 1, **dadurch gekennzeichnet, dass** die beiden optischen Sensoren (17) einen einzigen, gemeinsamen Signalgeber (12) anmessen.

3. Tretlagereinheit nach Anspruch 1, **dadurch gekennzeichnet, dass** der erste optische Sensor (17') einen ersten Signalgeber (12') und der zweite optische Sensor (24) einen zweiten Signalgeber (12") anmisst, wobei die beiden Signalgeber (12', 12") relativ zueinander um eine feste Phasendifferenz verdreht angeordnet sind.

4. Tretlagereinheit nach einem der Ansprüche 1 bis 3, **dadurch gekennzeichnet, dass** der Signalgeber (12; 12', 12") eine Markierung (19; 19'; 19") umfasst.

5. Tretlagereinheit nach Anspruch 4, **dadurch gekennzeichnet, dass** die Markierung (19, 19') an einer Scheibe ausgebildet ist, die mit der Tretlagerwelle (1) drehfest verbunden ist und sich im wesentlichen senkrecht zu der Achse der Tretlagerwelle (1) erstreckt.

6. Tretlagereinheit nach Anspruch 4 oder 5, **dadurch gekennzeichnet, dass** die Markierung (19') an einem Lagerring (15) des Lagers (3), insbesondere an einer Stirnfläche (23) des Lagerrings (15) des Lagers (3), angeordnet ist.

7. Tretlagereinheit nach Anspruch 6, **dadurch gekennzeichnet, dass** die Markierung (19') an einer Dichtung (22) angeordnet ist, die mit dem Lagerring (15) des Lagers (3) drehfest verbunden ist.

8. Tretlagereinheit nach Anspruch 4, **dadurch gekennzeichnet, dass** in einem Magnetfeld-Abschnitt (7, 8) des Korpus der Tretlagerwelle (1) ein permanentes Magnetfeld so eingeprägt ist, dass bei Vorliegen eines Drehmomentes in der Tretlagerwelle (1) ein außerhalb des Korpus erfassbares Magnetfeld erzeugt wird, wobei die Tretlagereinheit einen magnetischen Sensor (9, 10) umfasst, der das bei Vorliegen des Drehmomentes auftretende Magnetfeld erfasst, und dass die Markierung (19") auf der Oberfläche des Korpus der Tretlagerwelle (1), insbesondere an dem Magnetfeld-Abschnitt (7, 8), angeordnet ist.

9. Tretlagereinheit nach einem der Ansprüche 5 bis 8, **dadurch gekennzeichnet, dass** die Markierung (19', 19") durch eine in Umfangsrichtung umlaufende Abfolge von Abschnitten mit einer unterschiedlichen Beschichtung, Farbe, Lackierung oder Oberflächenrauhigkeit ausgebildet ist.

10. Tretlagereinheit nach einem der Ansprüche 5 bis 9, **dadurch gekennzeichnet, dass** die Markierung durch ein Schlauch- oder Folienelement ausgebildet ist.

11. Tretlagereinheit nach einem der Ansprüche 1 bis 7, **dadurch gekennzeichnet, dass** der Signalgeber (12) ein am Umfang in Umfangsrichtung gezähntes Scheibenelement (18) umfasst, wobei die Zähne (21) der Zähnung einen Teil der Markierung (19) ausbilden.

12. Tretlagereinheit nach Anspruch 11, **dadurch gekennzeichnet, dass** das Scheibenelement (18) als Zuschnitt eines Axialnadellagerkäfigs ausgebildet ist.

13. Tretlagereinheit nach einem der Ansprüche 3 bis 12, **dadurch gekennzeichnet, dass** das Teilungsverhältnis der Markierung (19) für jeden Teilkreis konstant ist.

14. Tretlagereinheit nach einem der Ansprüche 1 bis 13, **dadurch gekennzeichnet, dass** mindestens einer der beiden optischen Sensoren als Reflektionssensor (17; 17', 24) ausgebildet ist.

15. Tretlagereinheit nach einem der Ansprüche 1 bis 14, **dadurch gekennzeichnet, dass** mindestens einer der beiden optischen Sensoren als Transmissionssensor, insbesondere als Lichtschranke, ausgebildet ist.

16. Fahrrad, insbesondere E-Bike, Pedelec oder Ergometer, umfassend eine Tretlagereinheit nach einem der Ansprüche 1 bis 15.

## Claims

1. Bottom bracket unit, comprising
a bottom bracket shaft (1),
at least one bearing (2, 3) which rotatably holds the bottom bracket shaft (1), and
an optical detection unit (11; 11'; 11") by means of which the rotation speed of the bottom bracket shaft (1) can be detected, wherein the optical detection unit (11; 11'; 11") measures at least one signal encoder (12; 12', 12") which is rotationally fixed to the bottom bracket shaft (1),
**characterized**
**in that** the optical detection unit (11; 11') comprises two optical sensors (17; 17', 24), wherein one of the two sensors (17; 17') supplies a signal which is phase-shifted with respect to the other sensor (24) and has a fixed phase difference, in particular a phase difference of 90°.

2. Bottom bracket unit according to Claim 1, **characterized in that** the two optical sensors (17) measure a single, common signal encoder (12).

3. Bottom bracket unit according to Claim 1, **characterized in that** the first optical sensor (17') measures a first signal encoder (12'), and the second optical sensor (24) measures a second signal encoder (12"), wherein the two signal encoders (12', 12") are arranged rotated relative to one another by a fixed phase difference.

4. Bottom bracket unit according to one of Claims 1 to 3, **characterized in that** the signal encoder (12; 12', 12") comprises a mark (19; 19'; 19").

5. Bottom bracket unit according to Claim 4, **characterized in that** the mark (19, 19') is formed on a disc which is connected in a rotationally fixed fashion to the bottom bracket shaft (1) and extends essentially perpendicularly with respect to the axis of the bottom bracket shaft (1).

6. Bottom bracket unit according to Claim 4 or 5, **characterized in that** the mark (19') is arranged on a bearing ring (15) of the bearing (3), in particular on an end face (23) of the bearing ring (15) of the bearing (3).

7. Bottom bracket unit according to Claim 6, **characterized in that** the mark (19') is arranged on a seal (22) which is connected in a rotationally fixed fashion to the bearing ring (15) of the bearing (3).

8. Bottom bracket unit according to Claim 4, **characterized in that** a permanent magnetic field is impressed in a magnetic field section (7, 8) of the body of the bottom bracket shaft (1) in such a way that when a torque is present in the bottom bracket shaft (1) a magnetic field which can be detected outside the body is generated, wherein the bottom bracket unit comprises a magnetic sensor (9, 10) which detects the magnetic field which occurs when the torque is present, and **in that** the mark (19") is arranged on the surface of the body of the bottom bracket shaft (1), in particular on the magnetic field section (7, 8).

9. Bottom bracket unit according to one of Claims 5 to 8, **characterized in that** the mark (19', 19") is formed by a sequence of sections running around in the circumferential direction, with a different coating, colour, surface coating finish or surface roughness.

10. Bottom bracket unit according to one of Claims 5 to 9, **characterized in that** the mark is formed by a hose element or film element.

11. Bottom bracket unit according to one of Claims 1 to 7, **characterized in that** the signal encoder (12) comprises a disc element (18) which is toothed on the circumference in the circumferential direction, wherein the teeth (21) of the toothing arrangement form part of the mark (19).

12. Bottom bracket unit according to Claim 11, **characterized in that** the disc element (18) is embodied as the blank of an axial needle bearing cage.

13. Bottom bracket unit according to one of Claims 3 to 12, **characterized in that** the division ratio of the mark (19) is constant for each pitch circle.

14. Bottom bracket unit according to one of Claims 1 to 13, **characterized in that** at least one of the two optical sensors is embodied as a reflection sensor (17; 17', 24).

15. Bottom bracket unit according to one of Claims 1 to 14, **characterized in that** at least one of the two optical sensors is embodied as a transmission sensor, in particular as a photoelectric barrier.

16. Bicycle, in particular e-bike, pedelec or ergometer, comprising a bottom bracket unit according to one of Claims 1 to 15.

## Revendications

1. Bloc pédalier comprenant
un arbre de pédalier (1),
au moins un palier (2, 3) qui accueille en rotation l'arbre de pédalier (1), et
une unité de détection optique (11 ; 11' ; 11") par l'intermédiaire de laquelle peut être détectée la vitesse de rotation de l'arbre de pédalier (1), l'unité de détection optique (11 ; 11' ; 11") relevant au moins un transmetteur de signal (12 ; 12' ; 12") en rotation solidaire avec l'arbre de pédalier (1),
**caractérisé en ce**
**que** l'unité de détection optique (11 ; 11') comprend deux capteurs optiques (17 ; 17', 24), l'un des deux capteurs (17 ; 17') délivrant un signal déphasé d'une première différence par rapport à celui de l'autre capteur (24), notamment d'une différence de phase de 90°.

2. Bloc pédalier selon la revendication 1, **caractérisé en ce que** les deux capteurs optiques (17) relèvent un transmetteur de signal (12) commun unique.

3. Bloc pédalier selon la revendication 1, **caractérisé en ce que** le premier capteur optique (17') relève un premier transmetteur de signal (12') et le deuxième capteur optique (24) un deuxième transmetteur de signal (12"), les deux transmetteurs de signal (12', 12") étant disposés décalés d'une première différence de phase l'un par rapport à l'autre.

4. Bloc pédalier selon l'une des revendications 1 à 3, **caractérisé en ce que** le transmetteur de signal (12 ; 12', 12") comprend un marquage (19 ; 19', 19").

5. Bloc pédalier selon la revendication 4, **caractérisé en ce que** le marquage (19, 19') est réalisé sur un disque qui est relié en rotation solidaire avec l'arbre de pédalier (1) et qui s'étend pour l'essentiel perpendiculairement à l'axe de l'arbre de pédalier (1).

6. Bloc pédalier selon la revendication 4 ou 5, **caractérisé en ce que** le marquage (19') est disposé sur une bague de palier (15) du palier (3), notamment sur une face frontale (23) de la bague de palier (15) du palier (3).

7. Bloc pédalier selon la revendication 6, **caractérisé en ce que** le marquage (19') est disposé sur une garniture d'étanchéité (22) qui est en rotation solidaire avec la bague de palier (15) du palier (3).

8. Bloc pédalier selon la revendication 4, **caractérisé en ce qu'**un aimant permanent est incorporé dans une portion à champ magnétique (7, 8) du corps de l'arbre de pédalier (1) de telle sorte qu'en présence d'un couple dans l'arbre de pédalier (1), un champ magnétique détectable à l'extérieur du corps est généré, le bloc pédalier comprenant un capteur magnétique (9, 10) qui détecte le champ magnétique produit en présence du couple, et **en ce que** le marquage (19") est disposé sur la surface du corps de l'arbre de pédalier (1), notamment au niveau de la portion à champ magnétique (7, 8).

9. Bloc pédalier selon l'une des revendications 5 à 8, **caractérisé en ce que** le marquage (19', 19") est formé par une séquence de portions ayant un revêtement, une couleur, un vernissage ou une rugosité de surface différents sur le pourtour dans le sens de la circonférence.

10. Bloc pédalier selon l'une des revendications 5 à 9, **caractérisé en ce que** le marquage est formé par un élément en tuyau ou en film.

11. Bloc pédalier selon l'une des revendications 1 à 7, **caractérisé en ce que** le transmetteur de signal (12) comprend un élément en disque (18) denté sur le pourtour dans le sens de la circonférence, les dents (21) de la denture formant une partie du marquage (19).

12. Bloc pédalier selon la revendication 11, **caractérisé en ce que** l'élément en disque (18) est réalisé sous la forme d'une pièce découpée d'une cage de roulement à aiguilles axial.

13. Bloc pédalier selon l'une des revendications 3 à 12, **caractérisé en ce que** le rapport de division du marquage (19) est constant pour chaque arc de cercle.

14. Bloc pédalier selon l'une des revendications 1 à 13, **caractérisé en ce qu'**au moins l'un des deux capteurs optiques est réalisé sous la forme d'un capteur à réflexion (17 ; 17', 24).

15. Bloc pédalier selon l'une des revendications 1 à 14, **caractérisé en ce qu'**au moins l'un des deux capteurs optiques est réalisé sous la forme d'un capteur à transmission, notamment sous la forme d'une barrière photoélectrique.

16. Bicyclette, notamment bicyclette à assistance électrique, pédélec ou ergomètre, comprenant un bloc pédalier selon l'une des revendications 1 à 15.
